# EUROPÄISCHE PATENTSCHRIFT

(11) **EP 2 252 803 B1**
(45) Veröffentlichungstag und Bekanntmachung des Hinweises auf die Patenterteilung: **19.09.2012**
(21) Anmeldenummer: 09717994.9
(22) Anmeldetag: 06.02.2009
(51) Int. Cl.: F16B 19/10

(54) **SPREIZNIET**
EXPANDING RIVET
RIVET À EXPANSION

(30) Priorität: 05.03.2008 DE 102008012767
(43) Veröffentlichungstag der Anmeldung: 24.11.2010
(73) Patentinhaber: A. RAYMOND ET CIE, 38000 Grenoble (FR)
(72) Erfinder: BÜSCH, Martin, 79588 Efringen-Kirchen (DE); LESSER, Hans-Jürgen, 79618 Rheinfelden (DE); SILBEREISEN, Friedrich, 79588 Efringen-Kirchen (DE); STADLER, Thomas, 79588 Efringen-Kirchen (DE); VOLLMER, Jürgen, 79426 Buggingen (DE)
(74) Vertreter: Rüttgers, Joachim
(86) Internationale Anmeldenummer: PCT/EP2009/000810
(87) Internationale Veröffentlichungsnummer: WO 2009/109272

(56) Entgegenhaltungen:
- EP-A- 1 134 432
- DE-A1- 10 257 194
- GB-A- 971 370
- US-A- 6 074 144

## Beschreibung

Die Erfindung betrifft einen Spreizniet gemäß dem Oberbegriff des Patentanspruches 1.

Ein derartiger Spreizniet ist aus GB 971,370 A bekannt. Bei dem gattungsgemäßen Spreizniet ist ein länglicher Einsatzkörper vorhanden, der einen Kopfteller und zwei mit dem Kopfteller in Verbindung stehende Klemmschenkel aufweist. Die Klemmschenkel sind über den gesamten sich in Längsrichtung erstreckenden Einschiebeabschnitt im Gesamtumfang zylinderförmig ausgebildet. Weiterhin ist ein in dem Einsatzkörper verschiebbarer länglicher Einschiebestift vorhanden, der bei Bewegen von einer Vormontagestellung in eine Endmontagestellung mit den Klemmschenkeln in Kontakt kommt und auf die Klemmschenkel eine radial nach außen wirkende Kraft ausübt. Die Klemmschenkel weisen dem Kopfteller abgewandte Fußabschnitte auf, die über einen Sollbruchstellenabschnitt miteinander verbunden sind. Die Festigkeit des Sollbruchstellenabschnitts ist so eingerichtet, dass die Verbindung der Fußabschnitte über den Sollbruchstellenabschnitt in der Endmontagestellung des Einschiebestiftes zerstört ist und die Fußabschnitte somit voneinander getrennt sind.

Aus US 6,074,144 A ist ein Spreizniet bekannt, der zwei Klemmschenkel aufweist, von denen jeder über einen Kopfabschnitt verfügt, der sich von einem einem Kopfschaft benachbarten Anbindungsbereich radial nach außen über den Umfang des Kopfschaftes hinaus erstreckt. Weiterhin weist jeder Klemmschenkel an dem dem Kopfschaft abgewandten Ende des Kopfabschnittes einen Endabschnitt auf, der sich von dem Verbindungsbereich mit dem jeweiligen Kopfabschnitt radial nach innen erstreckt. Die Endabschnitte sind mit ihren den Kopfabschnitten abgewandten Enden miteinander verbunden, wobei der Verbindungsbereich durch eine Materialverdickung verstärkt ist.

Ein weiterer Spreizniet ist aus DE 102 57 194 A1 bekannt. Dieser vorbekannte Spreizniet verfügt über einen länglichen Einsatzkörper, der einen Kopfteller und zwei an dem Kopfteller angesetzte Klemmschenkel aufweist. Weiterhin ist der vorbekannte Spreizniet mit einem Einschiebestift ausgebildet, der verschiebbar in dem Einsatzkörper gelagert ist. Der Einsatzkörper kommt bei Bewegen von einer Vormontagestellung in eine Endmontagestellung mit den Klemmschenkeln in Kontakt und übt auf die Klemmschenkel eine radial nach außen wirkende Kraft aus, so dass bei einer bestimmungsgemäßen Anordnung in beispielsweise einem Trägerteil sowie einem mit dem Spreizniet an dem Trägerteil zu verbindenden Anbauteil eingebrachten Ausnehmungen die Klemmschenkel radial nach außen getrieben werden und den Rand einer in dem Trägerteil eingebrachten Ausnehmung, in den der Spreizniet eingefügt ist, hintergreifen.

Der Erfindung liegt die Aufgabe zugrunde, einen Spreizniet der eingangs genannten Art anzugeben, der sich bei einer hohen Klemmwirkung durch eine verhältnismäßig geringe Einfügekraft des Einschiebestiftes auszeichnet, wobei der Spreizniet sehr zuverlässig bestimmungsgemäß in dem oder jedem Bauteil, mit dem er zu verbinden ist, einfügbar ist.

Diese Aufgabe wird bei einem Spreizniet der eingangs genannten Art erfindungsgemäß mit den kennzeichnenden Merkmalen des Patentanspruches 1 gelöst.

Dadurch, dass bei dem erfindungsgemäßen Spreizniet die Fußabschnitte der Klemmschenkel über einen in seiner Festigkeit gegenüber den Fußabschnitten geschwächten sowie bei Einfügen des Spreizniets der radial nach innen erfolgenden Verformung der Klemmschenkel als Scharnier wirkenden Sollbruchstellenabschnitt miteinander verbunden sind, lässt sich der Spreizniet sehr zuverlässig und einfach bestimmungsgemäß anordnen, da selbst bei einem verkanteten Einsetzen in einer Ausnehmung nicht die Gefahr besteht, dass ein Klemmschenkel abgespreizt und der Spreizniet somit gegebenenfalls unbrauchbar wird. Bei Überführen des Einsatzkörpers von der Vormontagestellung in die Endmontagestellung jedoch wird der Sollbruchstellenabschnitt mit einem verhältnismäßig geringen Kraftaufwand zerstört, so dass die Klemmschenkel für ein sehr weites, allein durch die Materialeigenschaften der Spreizschenkel kraftbestimmtes Aufspreizen freigegeben sind.

Weitere zweckmäßige Ausgestaltungen von erfindungsgemäßen Spreiznieten sind Gegenstand der Unteransprüche.

Zweckmäßige Ausgestaltungen und Vorteile von erfindungsgemässen Spreiznieten ergeben sich aus der nachfolgenden Beschreibung von Ausführungsbeispielen mit Bezug auf die Figuren der Zeichnung. Es zeigen:
- Fig. 1: in einer perspektivischen Ansicht ein Ausführungsbeispiel eines erfindungsgemäßen Spreizniets mit einem Einsatzkörper und mit einem Einschiebestift, der im Bereich eines Stiftkopfes einen Anschlagvorsprung aufweist,
- Fig. 2: in einer Schnittansicht das Ausführungsbeispiel gemäß Fig. 1 in einer bestimmungsgemäßen Anordnung zum Verbinden eines Anbauteils an einem Trägerteil mit dem Einschiebestift in einer Vormontagestellung,
- Fig. 3: in einer Schnittansicht den Spreizniet gemäss Fig. 1 und Fig. 2 in der Anordnung gemäss Fig. 2 mit dem Einschiebestift in einer Endmontagestellung und
- Fig. 4: in einer weiteren Schnittansicht das Ausführungsbeispiel gemäss Fig. 1 bis Fig. 3 mit dem Einschiebestift in der Endmontagestellung.

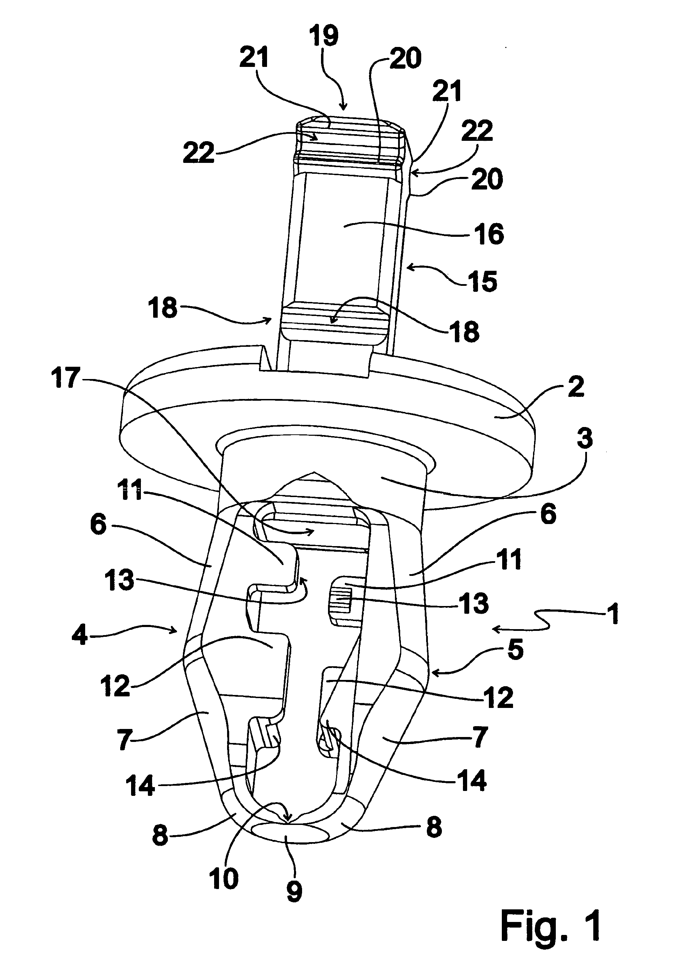

Fig. 1 zeigt in einer perspektivischen Ansicht ein Ausführungsbeispiel eines erfindungsgemässen Spreizniets, der über einen länglichen Einsatzkörper 1 verfügt. Der Einsatzkörper 1 ist mit einem flachen Kopfteller 2 ausgebildet, an den an einer Flachseite ein Kopfschaft 3 angesetzt ist. Der Kopfschaft 3 ist radial innenseitig des Randes des Kopftellers 2 angeordnet. An den Kopfteller 2 sind bei diesem Ausführungsbeispiel zwei einander gegenüberliegende Klemmschenkel 4, 5 angeformt, die sich von dem Kopfteller 2 wegerstrecken.

Jeder Klemmschenkel 4, 5 verfügt über einen Kopfabschnitt 6, der sich von dem dem Kopfschaft 3 benachbarten Anbindungsbereich radial nach außen über den Umfang des Kopfschaftes 3 hinaus erstreckt. An dem dem Kopfschaft 3 abgewandten Ende des Kopfabschnittes 6 verfügt jeder Klemmschenkel 4, 5 über einen Endabschnitt 7, der sich von dem Verbindungsbereich mit dem jeweiligen Kopfabschnitt 6 radial nach innen erstreckt. An dem dem Kopfabschnitt 6 abgewandten Ende des Endabschnittes 7 ist jeder Klemmschenkel 4, 5 mit einem Fußabschnitt 8 ausgebildet. Die Fußabschnitte 8 der Klemmschenkel 4, 5 sind radial nach innen gebogen und nach Herstellung des Einsatzkörpers 1 über einen Sollbruchstellenabschnitt 9 miteinander verbunden.

Bei dem dargestellten Ausführungsbeispiel weist der Sollbruchstellenabschnitt 9 eine Einkerbung 10 auf, die die Materialstärke des Sollbruchstellenabschnittes 9 im Bereich der Einkerbung 10 gegenüber der Materialstärke der Fußabschnitte 8 verringert.

Bei einem nicht dargestellten, gegenüber dem Ausführungsbeispiel von Fig. 1 abgewandelten Ausführungsbeispiel weist der Sollbruchstellenabschnitt 9 alternativ oder ergänzend zu der Einkerbung 10 wenigstens eine Schwächungsausnehmung auf, die sich in die Längsrichtung des Einsatzkörpers 1 durch den Sollbruchstellenabschnitt 9 erstreckt.

Weiterhin lässt sich Fig. 1 entnehmen, dass an jedem Klemmschenkel 4, 5 eine kopfseitige Führungszunge 11, die an dem jeweiligen Kopfabschnitt 6 angeformt ist, und eine fußseitige Führungszunge 12 angeordnet ist, die an dem Endabschnitt 7 angeformt ist und sich von dem Verbindungsbereich des Kopfabschnittes 6 mit dem Endabschnitt 7 in Richtung des Fußabschnittes 8 erstreckt. Die Führungszungen 11, 12 sind außenseitig an den Klemmschenkeln 4, 5 an voneinander abgewandten Randseiten der Klemmschenkel 4, 5 angeordnet. Die kopfseitigen Führungszungen 11 sind mit jeweils einem Rastvorsprung 13 ausgebildet, der sich radial nach innen erstreckt. Im Bereich der fußseitigen Führungszungen 12 ist an dem Endabschnitt 7 jedes Klemmschenkels 4, 5 eine Spreizrampe 14 ausgebildet, die sich von dem Verbindungsbereich des Kopfabschnittes 6 mit dem Endabschnitt 7 radial nach innen ansteigend in Richtung des jeweiligen Fußabschnittes 8 erstreckt.

Der erfindungsgemässe Spreizniet gemäss dem Ausführungsbeispiel von Fig. 1 ist weiterhin mit einem länglichen Einschiebestift 15 ausgestattet, der verschiebbar in dem Einsatzkörper 1 gelagert ist. Der Einschiebestift 15 verfügt über einen Stiftschaft 16 mit einem im Wesentlichen rechteckigen Querschnitt, der durch eine in dem Kopfteller 2 und dem Fußschaft 3 ausgebildete, entsprechend dimensionierte Einschiebeausnehmung 17 durchgreift. In etwa in der Mitte des Stiftschaftes 16 sind an einander gegenüberliegenden Außenseiten jeweils eine Rastausnehmung 18 ausgebildet, die sich in Querrichtung des Stiftschaftes 16 erstrecken.

Bei dem Ausführungsbeispiel gemäss Fig. 1 verfügt der Einschiebestift 15 an einem Ende des Stiftschaftes 16 über einen Stiftkopf 19, der mit Anschlagvorsprüngen 20 ausgebildet ist, die sich radial nach außen über den Stiftschaft 16 erstrecken. Weiterhin weist der Stiftkopf 19 in einem axialen Abstand von den Anschlagvorsprüngen 20 auf der den Rastausnehmungen 18 gegenüberliegenden Seite angeordnete Griffränder 21 auf, die radial über zwischen den Anschlagvorsprüngen 20 und den Griffrändem 21 ausgebildeten Zwischennuten 22 überstehen.

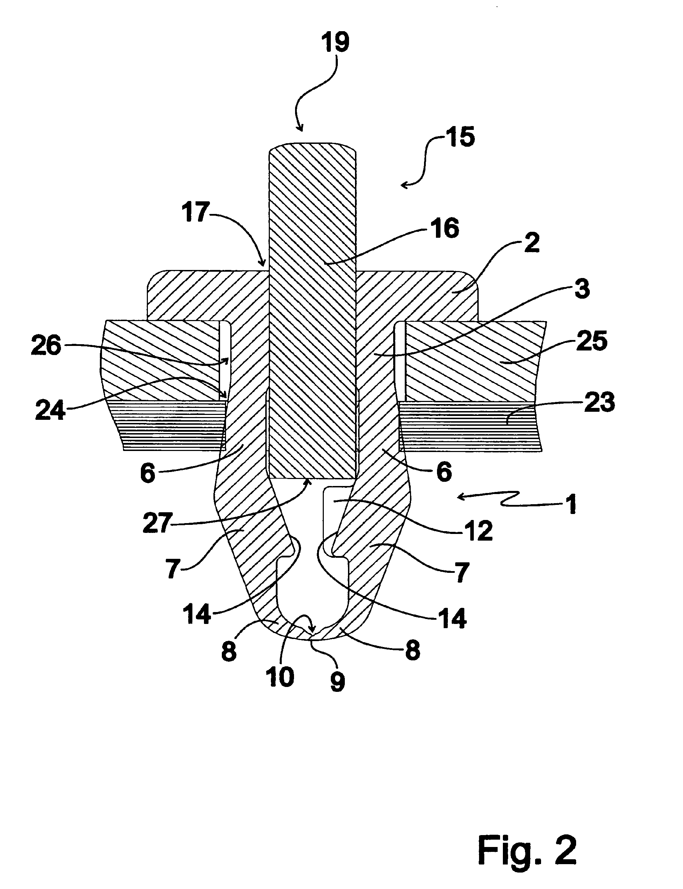

Fig. 2 zeigt in einer Schnittansicht eine Abwandlung des Ausführungsbeispiels gemäß Fig. 1, bei der der Stiftkopf 19 glattwandig abgerundet ausgebildet ist, in einer Einbausituation, in der der Einsatzkörper 1 des Spreizniets in eine in einem Trägerteil 23 als erstem Bauteil eingebrachte Trägerteilausnehmung 24, und in eine in einem Anbauteil 25 als zweitem Bauteil eingebrachte Anbauteilausnehmung 26 eingefügt ist. In der Darstellung gemäss Fig. 2 ist der Einschiebestift 15 in einer Vormontageanordnung, in der ein dem Klemmschenkel 4, 5 zugewandtes Fußende 27 des Stiftschaftes 16 des Einschiebestiftes 15 mit den Spreizrampen 14 bezüglich einer Spreizung der Klemmschenkel 4, 5 noch nicht wirksam in Kontakt ist. In dieser Vormontagestellung ist der Spreizniet gemäss dem erläuterten Ausführungsbeispiel in der Trägerteilausnehmung 24 aufgrund des schräggestellten Kopfabschnittes 6 mit einer gewissen Verspannung gehalten. Aufgrund der durch die Materialschwächung hervorgerufenen Scharnierfunktion des Sollbruchstellenabschnittes 9 ist der erfindungsgemäße Spreizniet unter Einfedern der Klemmschenkel 4, 5 radial nach innen mit einem verhältnismässig geringen Kraftaufwand durch die bei dieser Anordnung gegenüber der Anbauteilausnehmung 26 kleiner dimensionierten Trägerteilausnehmung 24 einfügbar.

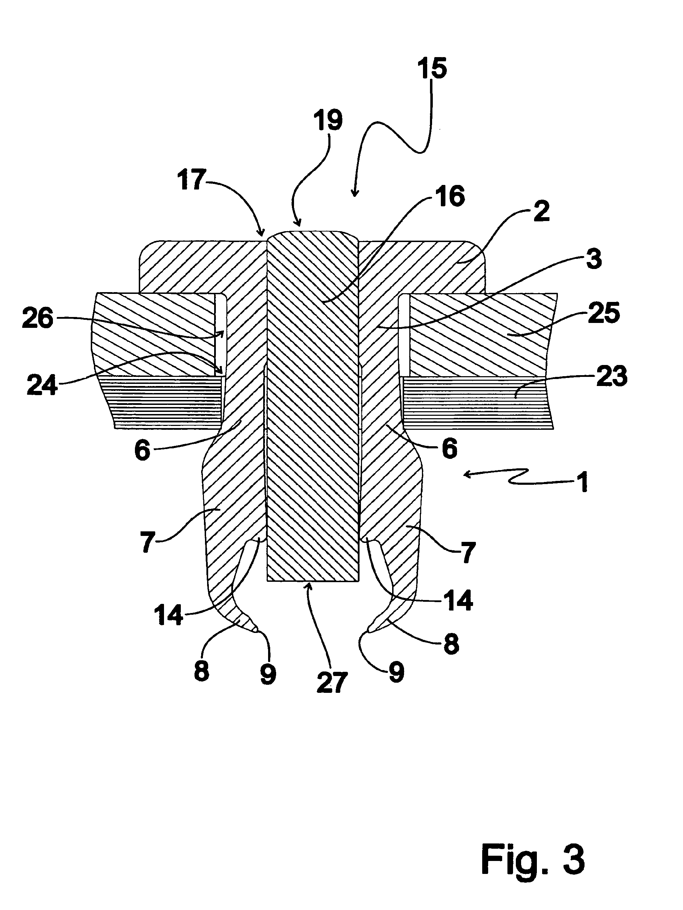

Fig. 3 zeigt in einer Schnittansicht die Abwandlung des Ausführungsbeispiels eines erfindungsgemässen Spreizniets gemäss Fig. 2 mit dem Einschiebestift 15 in einer Endmontagestellung, in der das den Klemmschenkeln 4, 5 zugewandte Fußende 27 des Stiftschaftes 16 über die dem jeweiligen Fußabschnitt 8 zugewandten Enden der Spreizrampen 14 hinaussteht. In dieser Endmontagestellung sind die Klemmschenkel 4, 5 aufgrund der Anlage der Spreizrampen 14 an dem Stiftschaft 15 mit einer damit verbundenen radial nach außen wirkenden Kraft radial nach außen bewegt, um die Sollauszugskraft des Spreizniets sicherzustellen. Aufgrund der bei Bewegen des Einschiebestiftes 15 von der Vormontagestellung gemäss Fig. 2 in die Endmontagestellung gemäss Fig. 3 auf die Klemmschenkel 4, 5 ausgeübten radial wirkenden Kraft wurde die Verbindung der Fußabschnitte 8 über den Sollbruchstellenabschnitt 9 zerstört, so dass die Fußabschnitte 8 nunmehr einen in etwa dem Durchmesser des Stiftschaftes 16 entsprechenden Abstand voneinander aufweisen. Dadurch ist auch der radiale Aufspreizweg der Klemmschenkel 4, 5 maximiert, da nunmehr keinerlei durch die Verbindung der Fußabschnitte 8 verursachten gegenwirkenden Kräfte vorhanden sind.

Weiterhin lässt sich der Darstellung gemäss Fig. 3 entnehmen, dass bei dem Ausführungsbeispiel gemäss Fig. 2 und Fig. 3 mit einem glattwandigen Stiftkopf 19 aufgrund der nunmehr voneinander beabstandeten Fußabschnitte 8 der Einschiebestift 15 durch den Einsatzkörper 1 hindurch verschiebbar ist.

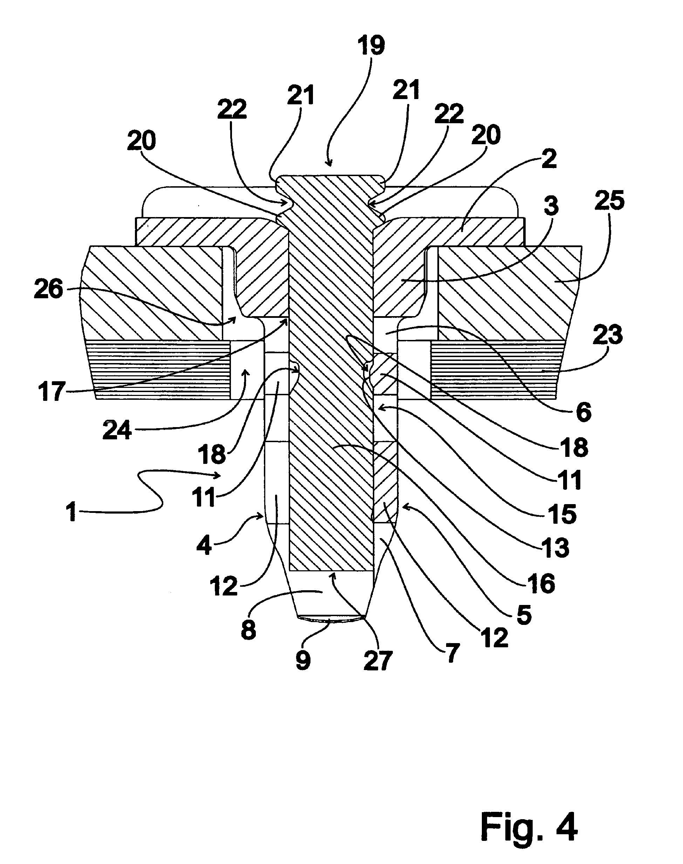

Fig. 4 zeigt eine gegenüber der Schnittansicht gemäss Fig. 3 um 90 Grad gedrehte Schnittansicht nunmehr wieder des Ausführungsbeispiels eines erfindungsgemässen Spreizniets gemäss Fig. 1 mit dem Einschiebestift 15 in der Endmontagestellung gemäss Fig. 3. Der Darstellung gemäss Fig. 4 ist zu entnehmen, dass in der Endmontagestellung die an den kopfseitigen Führungszungen 11 ausgebildeten Rastvorsprünge 13 in die an dem Stiftschaft 16 ausgebildeten Rastausnehmungen 18 eingreifen, so dass der Einschiebestift 15 gegen unbeabsichtigtes Herausrutschen aus dem Einsatzkörper 1 entgegen der Einführrichtung gesichert ist.

Weiterhin lässt sich der Darstellung gemäss Fig. 4 entnehmen, dass bei dem dargestellten Ausführungsbeispiel die Anschlagvorsprünge 20 in der Endmontagestellung an dem Kopfteller 2 anliegen, so dass sichergestellt ist, dass über Eingriff in die Zwischennut 22, beispielsweise mit einem Werkzeug, der Einschiebestift 15 nach Überwinden des durch die Verrastung der Rastersprünge 13 in die Rastausnehmungen 18 hervorgerufenen Widerstands wieder entgegen der Einführrichtung aus dem Eintrittskörper 1 entfernbar ist.

## Patentansprüche

1. Spreizniet mit einem länglichen Einsatzkörper (1), der einen Kopfteller (2) und wenigstens zwei mit dem Kopfteller (2) in Verbindung stehende Klemmschenkel (4, 5) aufweist, und mit einem in dem Einsatzkörper (1) verschiebbaren länglichen Einschiebestift (15), der bei Bewegen von einer Vormontagestellung in eine Endmontagestellung mit den Klemmschenkeln (4, 5) in Kontakt kommt und auf die Klemmschenkel (4, 5) eine radial nach außen wirkende Kraft ausübt, wobei die Klemmschenkel (4, 5) dem Kopfteller (2) abgewandte Fußabschnitte (8) aufweisen, wobei jeder Klemmschenkel (4, 5) über einen Kopfabschnitt (6) verfügt, der sich von einem einem Kopfschaft (3) benachbarten Anbindungsbereich radial nach außen über den Umfang des Kopfschaftes (3) hinaus erstreckt, wobei an dem dem Kopfschaft (3) abgewandten Ende des Kopfabschnittes (6) jeder Klemmschenkel (4, 5) über einen Endabschnitt (7) verfügt, der sich von dem Verbindungsbereich mit dem jeweiligen Kopfabschnitt (6) radial nach innen erstreckt, und wobei die Fußabschnitte (8) radial nach innen gebogen sind, **dadurch gekennzeichnet, dass** die Fußabschnitte über einen Sollbruchstellenabschnitt (9) miteinander verbunden sind, wobei die Festigkeit des Sollbruchstellenabschnitts (9) so eingerichtet ist, dass die Verbindung der Fußabschnitte (8) über den Sollbruchstellenabschnitt (9) in der Endmontagestellung des Einschiebestiftes (15) zerstört ist und die Fußabschnitte (8) somit voneinander getrennt sind,

2. Spreizniet nach Anspruch 1, **dadurch gekennzeichnet, dass** der Sollbruchstellenabschnitt (9) eine gegenüber den an den Sollbruchstellenabschnitt (9) benachbarten Bereichen der Fußabschnitte (8) geringere Materialstärke aufweist.

3. Spreizniet nach Anspruch 2, **dadurch gekennzeichnet, dass** der Sollbruchstellenabschnitt (9) eine Einkerbung (10) aufweist.

## Claims

1. Expanding rivet having an elongated body for insertion (1) which has a top disc (2) and at least two retaining legs (4, 5) which are connected to the top disc (2), and having an elongated pin for forcing-in (15) which is displaceable in the body for insertion (1) and which, when moved from a preliminary fitted position to a final fitted position, comes into contact with the retaining legs (4, 5) and exerts on the retaining legs (4, 5) a force which acts outwards radially, the retaining legs (4, 5) having bottom portions (8) remote from the top disc (2), each retaining leg (4, 5) having a top portion (6) which, from an attachment region adjacent a top shank (3), extends radially outwards beyond the circumference of the top shank (3), each retaining leg (4, 5) having, at that end of the top portion (6) which is remote from the top shank (3), an end portion (7) which extends radially inwards from the region where it is connected to the given top portion (6), and the bottom portions (8) being curved inwards radially, **characterised in that** the bottom portions are connected together by a portion (9) forming an intended break point, the strength of the portion (9) forming the intended break point being so arranged that the connection between the bottom portions (8) made by the portion (9) forming the intended break point is destroyed, and the bottom portions (8) are thus separated from one another, when the pin for forcing-in (15) is in the final fitted position.

2. Expanding rivet according to claim 1, **characterised in that** the thickness of the material of the portion (9) forming the intended break point is less than that of those regions of the bottom portions (8) which are adjacent the portion (9) forming the intended break point.

3. Expanding rivet according to claim 2, **characterised in that** the portion (9) forming the intended break point has an indentation (10).

## Revendications

1. Rivet à segments expansibles se composant d'un élément d'encastrement de forme allongée (1) qui est constitué par une collerette d'appui formant tête (2) et au moins deux pattes d'accrochage (4, 5) qui sont raccordées à la collerette d'appui formant tête (2), et d'une tige d'emmanchement de forme allongée (15) destinée à être poussée dans l'élément d'encastrement (1) qui, lorsqu'elle est poussée de sa position de présentation jusque dans sa position d'insertion en fin de course, vient en contact avec les pattes d'accrochage (4, 5) et exerce sur les pattes d'accrochage (4, 5) une force orientée vers l'extérieur dans le plan radial, dans lequel les pattes d'accrochage (4, 5) comportent des segments inférieurs d'ancrage (8) orientés à l'opposé de la collerette d'appui formant tête (2), dans lequel chaque patte d'accrochage (4, 5) comporte une portion de tête (6) qui, depuis une portion de raccordement contigüe à une portion supérieure formant fût (3), s'étend vers l'extérieur dans le plan radial sur toute la périphérie de la portion supérieure formant fût (3), dans lequel chaque patte d'accrochage (4, 5) comporte, au niveau de l'extrémité de la portion de tête (6) se situant à l'opposé de la portion supérieure formant fût (3), une portion d'extrémité (7) qui s'étend, depuis la portion de raccordement à la portion de tête (6) respective, vers l'intérieur dans le plan radial et dans lequel les segments inférieurs d'ancrage (8) sont repliés vers l'intérieur dans le plan radial, **caractérisé en ce que** les segments inférieurs d'ancrage sont respectivement reliés ensemble par une portion de liaison à rupture obligée (9), la résistance mécanique de la portion de liaison à rupture obligée (9) étant en l'occurrence prévue à une valeur telle que, dans la position d'insertion en fin de course de la tige d'emmanchement (15), la liaison de raccordement des segments inférieurs d'ancrage (8) réalisée par l'intermédiaire de la portion de liaison à rupture obligée (9) est dissociée et que les segments inférieurs d'ancrage (8) sont par conséquent séparés l'un de l'autre.

2. Rivet à segments expansibles selon la revendication 1, **caractérisé en ce que** l'épaisseur de la portion de liaison à rupture obligée (9) est plus faible que celle des zones des segments inférieurs d'ancrage (8) voisines de la portion de liaison à rupture obligée (9).

3. Rivet à segments expansibles selon la revendication 2, **caractérisé en ce que** la portion de liaison à rupture obligée (9) comporte une entaille (10)
